# EUROPÄISCHE PATENTSCHRIFT

(11) **EP 0 553 473 B1**
(45) Veröffentlichungstag und Bekanntmachung des Hinweises auf die Patenterteilung: **22.05.1996**
(21) Anmeldenummer: 92121537.2
(22) Anmeldetag: 18.12.1992
(51) Int. Cl.: F16L 3/22, F24D 3/14

(54) **Halte- und Distanzierungssystem**
Support and distance arrangement
Système de fixation et d'écartement

(30) Priorität: 20.12.1991 DE 9115835 U
(43) Veröffentlichungstag der Anmeldung: 04.08.1993
(73) Patentinhaber: Hewing GmbH, D-48607 Ochtrup (DE)
(72) Erfinder: Broda, Siegfried, D-4358 Haltern 6 (DE); Schulte, Bernhard, D-4400 Münster (DE)
(74) Vertreter: Hilleringmann, Jochen, Dipl.-Ing.

(56) Entgegenhaltungen:
- EP-A- 0 189 020
- DE-A- 2 725 950
- DE-A- 2 840 148
- DE-A- 3 109 593

## Beschreibung

Die Erfindung betrifft ein Halte- und Distanzierungssystem nach dem Oberbegriff des Anspruches 1.

Aus der DE-PS 33 18 694 ist ein folienartiges Flächenelement mit durch Ausstülpung aus einer Deckfolie gebildeten Halteelementen bekannt. Die Halteelemente dienen zum Festlegen von Rohren einer Fußbodenheizung. Die dort beschriebenen Halteelemente weisen jeweils vier Klemmfinger auf, die durch gekrümmte Verbindungselemente zu einer Einheit verbunden sind, wobei die Form eines Halteelementes relativ kompliziert ist. Die Außenwände der Halteelemente verlaufen konisch, während die Innenwände so gestaltet sind, daß sie sich einem dort festzuklemmenden Rohr möglichst weitgehend anschmiegen. Eine Festlegung eines Heizungsrohres ist somit nur im Inneren eines Halteelementes durch Klemmung zwischen den Klemmfingern möglich. Durch die Gestaltung der Halteelemente mit vier Klemmfingern kann ein Rohr wahlweise in zwei Richtungen darin festgelegt werden, wobei die Richtungen in einem Winkel von 90° zueinander stehen. Die Gestaltung des Halteelementes bestimmt dabei den Durchmesser des festzulegenden Rohres. Wenn sich auch das bekannte Halteelemente in der Praxis durchaus bewährt hat, wurde es doch als Mangel festgestellt, daß die Rohre auf der bekannten, mit Halteelementen ausgestalteten Deckfolie nur in zwei um 90° kreuzweise verlaufenden Richtungen verlegbar sind. Eine Verlegung in einem anderen Winkel, insbesondere diagonal dazu, ist nicht möglich. Weiterhin macht die komplizierte Gestaltung der Halteelemente den Herstellungsprozeß der Deckfolie mit den durch Ausstülpung gebildeten Halteelementen relativ schwierig, da die Deckfolie in dem Verfahren nach DE-PS 33 18 694 einer recht weitgehenden Verformung in einem Tiefziehprozeß unterworfen wird. Unter diesem bekannten Halteelement ist gemäß ein plattenförmiges Isolierelement aus Schaumstoff angeordnet, welches einstückige Vorsprünge aufweist, die in die Halteelemente einsteckbar sind. Auch die Herstellung des Isolierelementes ist wegen dieser einstückig angeformten Vorsprünge aufwendig. Weiter ist die bekannte Deckfolie durch in ihrer Grundebene die Halteelemente umschließende Sicken nicht optimal ausgesteift, wodurch dickere Folien oder steifere Isolierplatten erforderlich sind.

Es stellt sich daher die Aufgabe, ein Halte- und Distanzierungssystem der eingangs genannten Art zu schaffen, das strangförmige Bauteile, insbesondere Rohre oder Schläuche, in zwei um 90° kreuzweise angeordneten Wegen sicher haltert, wobei das Halte- und Distanzierungssystem ferner einfach und unkompliziert gestaltet ist sowie problemlos gefertigt werden kann und mit relativ einfachen Formänderungen auch die Verlegung von strangförmigen Bauteilen wenigstens zweier unterschiedlicher Durchmesser ermöglicht.

Die Lösung dieser Aufgabe gelingt erfindungsgemäß durch ein Halte- und Distanzierungssystem mit den Merkmalen des Anspruches 1.

Durch die Gestaltung des neuen Halte- und Distanzierungssystem wird erreicht, daß ein strangförmiges Bauteil wahlweise sowohl im inneren Bereich zwischen den Halteflächen der vier Bauteilhalter in zwei um 90° kreuzweise verlaufenden Richtungen als auch in zwei jeweils um 45° dazu geschwenkten Richtungen zwischen den vom Mittelpunkt abgewandten Halteflächen zweier benachbarter oder desselben Bauteilhalters festlegbar ist. Durch die Rückhaltemittel sowohl der dem Mittelpunkt des Halteelementes zugewandten Halteflächen als auch der dem Mittelpunkt abgewandten Seite der Bauteilhalter wird eine sichere Halterung der strangförmigen Bauteile erreicht.

In einer ersten Weiterbildung des Halte- und Distanzierungssystems weist jeweils die vom Mittelpunkt abgewandte Seite der Bauteilhalter einer Haltergruppe eine Haltefläche auf, die etwa senkrecht zur Längsachse angeordnet und mit Rückhaltemitteln für ein eingelegtes strangförmiges Bauteil ausgebildet oder versehen ist. Damit können zwischen den vom Mittelpunkt abgewandten Seiten der Bauteilhalter insbesondere senkrecht zu deren Längsachsen verlaufende strangförmige Bauteile gehaltert werden.

Eine alternative Ausgestaltung sieht vor, daß die vom Mittelpunkt abgewandten Seiten der Bauteilhalter einer Haltergruppe jeweils zwei von der Grundebene des Halteelementes aufragende und symmetrisch zu der zugehörigen Längsachse angeordnete Halteflächen aufweisen, die in einem Winkel von 30 - 45° zur Längsachse stehen und mit Rückhaltemitteln für ein eingelegtes strangförmiges Bauteil ausgebildet oder versehen sind. Diese Gestaltung bietet den Vorteil, daß zwischen den vom Mittelpunkt abgewandten Seiten der Haltenoppen sowohl senkrecht zur Längsachse als auch unter 45° zur Längsachse verlaufende strangförmige Bauteile wahlweise gehaltert werden können.

Hinsichtlich der an den Halteflächen der Bauteilhalter vorgesehenen Rückhaltemittel ist bevorzugt vorgesehen, daß diese durch elastisch-flexibel aufweitbare Hinterschneidungen oder durch elastisch-flexibel aufweitbare Federelemente, wie Federstreifen, -zungen oder -nasen, gebildet sind. Derartig ausgestaltete Rückhaltemittel sind einerseits einfach herstellbar und bieten andererseits eine sichere Halterung eines eingelegten strangförmigen Bauteils.

Die Bauteilhalter können in einer weiteren Ausgestaltung mit parallel zur zugehörigen Längsachse angeordneten Längsseiten ausgebildet sein. Dadurch wird das Volumen der Bauteilhalter gering gehalten, was Materialeinsparungen ermöglicht.

Weiter ist vorgesehen, daß die Bauteilhalter in ihrem Mittelbereich jeweils eine Querausnehmung oder -durchbrechung mit zwei einander gegenüberliegenden, aufeinander zu weisenden Halteflächen aufweisen. Hierdurch werden innerhalb jedes Bauteilhalters vier weitere Haltemöglichkeiten für ein festzulegendes strangförmiges Bauteil geschaffen. Dies ermöglicht wahlweise eine dichtere Verlegung von strangförmigen Bauteilen oder eine größere Auswahl an zur Verfügung stehenden Verlegungswegen.

Weiterhin kann an der von dem Mittelpunkt abgewandten Seite wenigstens eines Bauteilhalters einer Haltergruppe ein zusätzlicher Bauteilhalter vorgesehen sein, wobei diese beiden Bauteilhalter einander gegenüberliegende, aufeinander zu weisende, zusammenwirkende Halteflächen aufweisen. Durch diesen zusätzlichen Bauteilhalter wird mindestens eine weitere zusätzliche Haltemöglichkeit für ein strangförmiges Bauteil geschaffen, wobei wahlweise je Haltergruppe vorzugsweise zwischen ein und vier zusätzliche Bauteilhalter vorhanden sein können. Dementsprechend ergeben sich ein bis vier zusätzliche Halterungsstellen für strangförmige Bauteile und entsprechend weitere mögliche Verlegungswege.

Je nach gewünschter Richtung der zusätzlichen Verlegungswege, die durch die zusätzlichen Bauteilhalter geschaffen werden, können letztere entweder in einer geradlinigen Anordnung relativ zu den Bauteilhaltern der betreffenden Haltergruppe angeordnet sein oder auch in der Weise angeordnet sein, daß die Verbindungslinie zwischen den Halteflächen des Bauteilhalters der Haltergruppe und des zusätzlichen Bauteilhalters gegenüber der Längsachse des zugehörigen Bauteilhalters der Haltergruppe um 45° abgewinkelt ist.

Die Bauteilhalter können weiterhin mit glattflächigen Längsseiten ausgebildet werden und etwa senkrecht auf der Grundebene des Halteelementes angeordnet sein. Durch die Ausbildung der Bauteilhalter als relativ einfache Körper mit glatten, etwa senkrecht angeordneten Wänden wird der Fertigungsvorgang des Halteelementes, insbesondere dessen Entformung, wesentlich erleichtert. Wird z. B. das Halteelement als Folie hergestellt, ist dies besonders beim Trennen der Folie von der Tiefziehmatrize von Bedeutung. Hinterschneidungen an den mit dem strangförmigen Bauteil in Eingriff kommenden Halteflächen stören den Trennvorgang nicht, da das Halteelement hier elastisch verformbar ist.

Zur Aussteifung der Bauteilhalter können zumindest deren Längsseiten mit Rippen und/oder Wellen und/oder Sicken versehen sein. Hierdurch kann bei gleicher Materialstärke eine höhere mechanische Stabilität erzielt werden oder alternativ bei gleichbleibender mechanischer Stabilität eine geringere Materialstärke erreicht werden.

In einer weiteren Ausgestaltung ist die Grundebene des Halteelementes zwischen den Bauteilhaltern im wesentlichen glattflächig, so daß sie dort problemlos und ohne Gefahr der Beschädigung begehbar ist, was insbesondere großflächige Verlegungen im Bodenbereich erleichtert.

Eine alternative Ausgestaltung ist dadurch gekennzeichnet, daß zwischen den Bauteilhaltern verlaufende, von der Grundebene des Halteelementes aufragende oder absinkende Rippen vorgesehen sind. Diese Rippen dienen zum einen der Versteifung des Halteelementes und zum anderen als Auflage für die zu haltenden strangförmigen Bauteile, um für diese eine praktisch vollständige Einbettung in ein gegebenenfalls aufzubringendes aushärtendes Medium, z. B. eine Estrichschicht, zu gewährleisten. Dabei verlaufen die Rippen vorzugsweise zwischen den Halteflächen benachbarter Bauteilhalter, um insbesondere innerhalb einer Haltergruppe eine hohe Stabilität zu erzielen.

Das vorgeschlagene Halte- und Distanzierungssystem sieht in einer bevorzugten Ausgestaltung eine Anordnung einer Vielzahl von Halteelementen auf einer gemeinsamen Grundebene in Form eines gleichmäßigen quadratischen Rasters vor, das von den Längsachsen der Bauteilhalter gebildet wird. Dadurch wird erreicht, daß bei Verlegung strangförmiger Bauteile sowohl parallel zu den Rasterlinien als auch diagonal zu den Rasterlinien jeweils eine Vielzahl paralleler Verlegewege zur Verfügung steht.

Eine Ausgestaltung des erfindungsgemäßen Halte- und Distanzierungssystems sieht vor, daß der bestand zwischen den Halteflächen zweier benachbarter Bauteilhalter eines Halteelementes gleich dem Abstand zwischen den einander zugewandten Seiten der Bauteilhalter zweier benachbarter Halteelemente ist. Dadurch wird erreicht, daß ein strangförmiges Bauteil eines bestimmten Durchmessers problemlos streckenweise parallel zu den Rasterlinien und auf einer anderen Strecke diagonal dazu klemmbar ist.

Alternativ kann der Abstand zwischen den Halteflächen zweier benachbarter Bauteilhalter eines Halteelementes kleiner oder größer als der Abstand zwischen den einander zugewandten Seiten der Bauteilhalter zweier benachbarter Halteelemente sein. Hierdurch wird erreicht, daß strangförmige Bauteile wenigstens zweier unterschiedlicher Durchmesser innerhalb desselben Halte- und Distanzierungssystems ohne Änderungen oder Anpassungsarbeiten problemlos verlegt werden können.
In einer weiteren Ausgestaltung ist die Höhe der Bauteilhalter im wesentlichen gleich oder größer den beiden vorangehend definierten Abständen bzw. dem größeren dieser Abstände. Dadurch wird eine sichere Klemmung der strangförmigen Bauteile und eine kompakte Bauweise erreicht.

Eine weitere Ausgestaltung sieht vor, daß jedes Halteelement eine einzelne Haltergruppe von vier Bauteilhaltern umfaßt, welche auf einer unterliegenden, an der Montagefläche anbringbaren Grundstruktur angeordnet sind. Gemäß der bevorzugten Weiterbildung ist dabei vorgesehen, daß die Flächengröße der Grundstruktur der von dem Halteelement belegten Fläche entspricht. Hierdurch werden kleine, leicht anbringbare Einzelelemente geschaffen, die gezielt plaziert werden können, um strangförmige Bauteile zu haltern, ohne vollflächig Halteelemente zu benötigen. Hierdurch ist eine verbesserte Anpassung an die Erfordernisse des einzelnen Anwendungsfalles möglich und es wird Material für das Halte- und Distanzierungssystem gespart.

Das vorangehend beschriebene Halteelement mit einer einzelnen Haltergruppe kann zur Schaffung von zusätzlichen Halterungsmöglichkeiten neben den vier Bauteilhaltern der Haltergruppe auch noch wenigstens einen und höchstens vier zusätzliche Bauteilhalter umfassen. Durch jeden zusätzlichen Bauteilhalter wird dann eine zusätzliche Halterungsmöglichkeit für ein strangförmiges Bauteil gewonnen.

Als Weiterbildung der zuletzt beschriebenen Ausgestaltungen mit nur einer Haltergruppe ist schließlich noch vorgesehen, daß unter der Grundstruktur eine zur Anbringung des Halteelementes an der Montagefläche dienende Montagehilfe oder -einrichtung angeordnet ist. Dies vereinfacht und beschleunigt die Montage der Halteelemente. Ergänzend kann an dieser Montagehilfe oder -einrichtung die Grundstruktur mit den vier die Haltergruppe bildenden Bauteilhaltern um den zugehörigen Mittelpunkt in der Grundebene drehbar gehalten sein. Hierdurch kann auch nach Anbringung des Halteelementes an der Montagefläche eine nachträgliche Ausrichtung der Bauteilhalter erfolgen, wodurch die Verlegearbeiten des Halte- und Distanzierungssystems und der von diesem zu haltenden strangförmigen Bauteile weiter vereinfacht und eine höhere Flexibilität des Systems erreicht wird. Diese drehbare Halterung kann dabei eine Arretierung aufweisen oder mit mehreren Raststellen ausgebildet sein, welche mit bevorzugten Verdrehstellungen korrespondieren, um das Ausrichten zu vereinfachen.

Die Halteelemente des erfindungsgemäßen Halte- und Distanzierungssystems sowie dessen Grundebene oder Grundstruktur können hinsichtlich ihres Aufbaues, ihres Materials und ihrer Herstellungsweise unterschiedlich ausgebildet sein, wobei bevorzugte Ausführungen hierfür in den Ansprüchen 25 bis 31 angegeben sind.

Das Einsatzgebiet des vorgeschlagenen Halte- und Distanzierungssystems umfaßt alle Arten von strangförmigen Bauteilen, z.B. Rohre, Schläuche, Kabel und dergleichen. In den Rohren können gasförmige oder flüssige Medien aller Art strömen. Die Medien dienen dabei z.B. zum Transport von Wärme in Heiz- und Kühlanlagen. Ein bevorzugtes Anwendungsgebiet des vorgeschlagenen Halte- und Distanzierungssystems ist die Fußbodenheizung.

Im folgenden werden Ausführungsbeispiele der Erfindung anhand einer Zeichnung erläutert. Die Figuren der Zeichnung zeigen:
- Figur 1: eine Draufsicht eines Halteelementes als Teil eines Halte- und Distanzierungssystems mit einem diagonal geklemmten Rohr und einem an einer vom Mittelpunkt abgewandten Haltefläche positionierten Rohr, wobei das gegenüberliegende Halteelement nur teilweise dargestellt ist,
- Figur 2: eine Draufsicht eines Halteelementes in einer geänderten Ausführung, ebenfalls mit einem diagonal und einem unter 45° dazu geklemmten Rohr,
- Figur 3a: einen schematisch ausgeführten Längsschnitt entlang der Linie IIIa-IIIa in Figur 2,
- Figur 3b: einen schematisch ausgeführten Längsschnitt entlang der Linie IIIb-IIIb in Figur 2,
- Figur 4: eine Draufsicht eines Halteelementes in einer dritten Ausführung,
- Figur 5: eine Draufsicht eines Halteelementes in einer vierten Ausführung,
- Figur 6: einen schematisch ausgeführten Querschnitt entlang der Linie VI-VI in Figur 1,
- Figur 7: einen Längsschnitt entlang der Linie VII-VII in Figur 1,
- Figur 8a: einen Bauteilhalter in geänderter Ausführung in Draufsicht,
- Figur 8b: einen Bauteilhalter in einer weiteren Ausführung in Draufsicht,
- Figur 9: eine Draufsicht auf ein Halte- und Distanzierungssystem mit einem diagonal und einem parallel zu Rasterlinien geklemmten Rohr,
- Figur 10: ein Einzel-Halteelement in Draufsicht in einer ersten Ausführung und
- Figur 11: ein Einzel-Halteelement in Draufsicht in einer zweiten Ausführung.

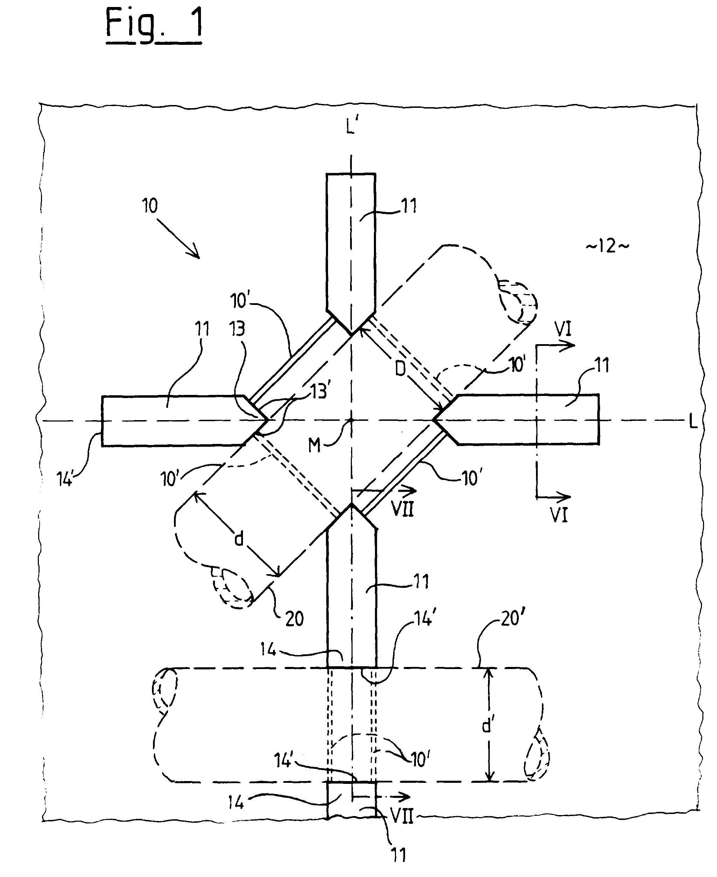

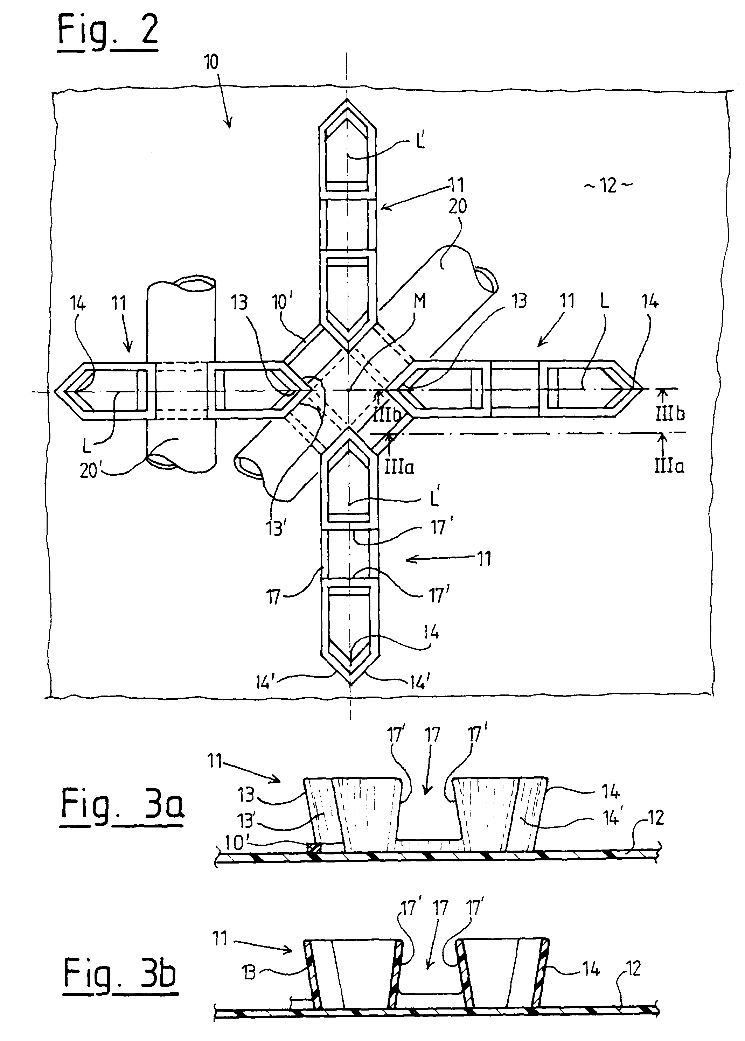

Mit Bezugnahme auf Figuren 1 und 2 ist ein Halteelement 10 dargestellt. Das Halteelement 10 weist vier langgestreckte Bauteilhalter 11 auf, die voneinander beabstandet rotationssymmetrisch um einen Mittelpunkt M angeordnet sind, wobei sich ihre Längsachsen L, L' in dem Mittelpunkt M schneiden. Die dem Mittelpunkt M zugewandten Seiten 13 der Bauteilhalter 11 weisen jeweils zwei etwa senkrecht zur Grundebene 12 und symmetrisch zu ihrer Längsachse L, L' angeordnete Halteflächen 13' auf, die in einem Winkel von 45° zur Längsachse L, L' stehen.

Die Bauteilhalter 11 weisen bei dem Ausführungsbeispiel gemäß Figur 1 jeweils eine vom Mittelpunkt M abgewandte Seite 14 auf, die etwa senkrecht zur jeweils zugehörigen Längsachse L, L' angeordnet ist und als äußere Haltefläche 14' wirkt. Die Längsseiten 15 der Bauteilhalter 11 erstrecken sich jeweils parallel zu der zugehörigen Längsachse L, L'. Der Bauteilhalter 11 ist oben durch die Oberseite 16 begrenzt; an seiner Fußseite geht er nahtlos etwa rechtwinklig in die Grundebene 12 über.

Die einander zugewandten Halteflächen 13' zweier benachbarter Bauteilhalter 11 des Halteelementes 10 weisen dazwischen einen Abstand D auf, der etwa dem Durchmesser d eines zu halternden strangförmigen Bauteils, beispielsweise eines Rohres 20, entspricht. Ein solches Rohr 20 ist schematisch angedeutet. Die Bauteilhalter 11 weisen gegenüber der Grundebene 12 eine Höhe H auf, die etwa gleich dem Abstand D ist. Das Rohr 20 wird innerhalb des Halteelementes 10 von den vier Bauteilhaltern 11 mit den Halteflächen 13' erfaßt und im Winkel von 45° zu den Längsachsen L, L' sicher gehalten, hier geklemmt.

Ein Rohr 20' mit Durchmesser d' wird von der Haltefläche 14' an der Seite 14 eines der vier Bauteilhalter 11 klemmend erfaßt, wobei die Haltefläche 14' mit der gegenüberliegenden Haltefläche 14' eines weiteren, benachbarten Bauteilhalters 11, der nur teilweise dargestellt ist, zusammenwirkt.

Bei dem Ausführungsbeispiel gemäß Figur 2 sind die einzelnen Bauteilhalter 11 auch an ihrem jeweils vom Mittelpunkt M abgewandten Ende 14 mit zwei Halteflächen 14' ausgebildet, die jeweils unter einem Winkel von etwa 45° zur zugehörigen Längsachse L, L' verlaufen. Ein weiterer Unterschied gegenüber dem Ausführungsbeispiel gemäß Figur 1 besteht darin, daß jeder Bauteilhalter 11 des gezeigten Halteelementes 10 in seinem Mittelbereich, d.h. in seinem Bereich zwischen dem Ende 13 und dem Ende 14, jeweils eine Querausnehmung 17 besitzt, die in Längsrichtung des Bauteilhalters gesehen beidseitig von je einer Haltefläche 17' begrenzt ist. Hierdurch wird je Bauteilhalter 11 eine weitere Halterungsmöglichkeit für ein strangförmiges Bauteil geschaffen, wie dies im linken Teil der Figur 2 durch das Rohr 20' angedeutet ist.

Zur Aussteifung des Halteelementes 10 und zur Schaffung einer die Rohre 20, 20' von der Grundebene 12 abhebenden Unterstützung sind bei den Halteelementen 10 sowohl nach Figur 1 als auch nach Figur 2 zwischen den Halteflächen 13' von dem einen Bauteilhalter 11 zum anderen, benachbarten Bauteilhalter 11 verlaufende, aus der Grundebene 12 nach oben vorragende Rippen 10' vorgesehen. Dabei können diese sowohl einzeln, wie in Figur 1, oder paarweise, wie in Figur 2, angeordnet sein.

Figur 3a der Zeichnung zeigt den in Figur 2 rechten Bauteilhalter 11 in einer Ansicht auf dessen Längsseite, wobei insbesondere deutlich wird, daß die Enden 13 und 14 des Bauteilhalters nach Art eines Schiffbuges ausgebildet sind und so jeweils zwei hinterschnittene Halteflächen 13' bzw. 14' bilden. Im Bereich zwischen den Enden 13 und 14 des Bauteilhalters 11 ist die Querausnehmung 17 deutlich sichtbar, die zu ihren beiden Seiten von den Halteflächen 17' begrenzt wird. Unterhalb des Bauteilhalters 11 ist die Grundebene 12, hier eine Kunststoffolie oder -platte, sichtbar. Im linken Bereich der Figur 3a ist noch oberhalb der Grundebene 12 eine der Rippen 10' angeschnitten erkennbar.

Figur 3b zeigt denselben Bauteilhalter 11, nun in einem Längsschnitt entlang der Längsachse L. Auch hier ist wieder die schiffsbugartige Ausformung der Enden 13 und 14 des Bauteilhalters 11 sichtbar, wobei die so gebildeten Hinterschneidungen für eine klemmende Halterung eines von oben eingedrückten strangförmigen Bauteils sorgen. Im Mittelbereich des Bauteilhalters 11 ist wieder die Querausnehmung 17 mit den diese begrenzenden Halteflächen 17' sichtbar, wobei auch hier eine Hinterschneidung besteht, die ebenfalls zur Klemmung eines von oben eingedrückten strangförmigen Bauteils dient. Die Unterlage für den Bauteilhalter 11 bildet auch hier wieder die Grundebene 12.

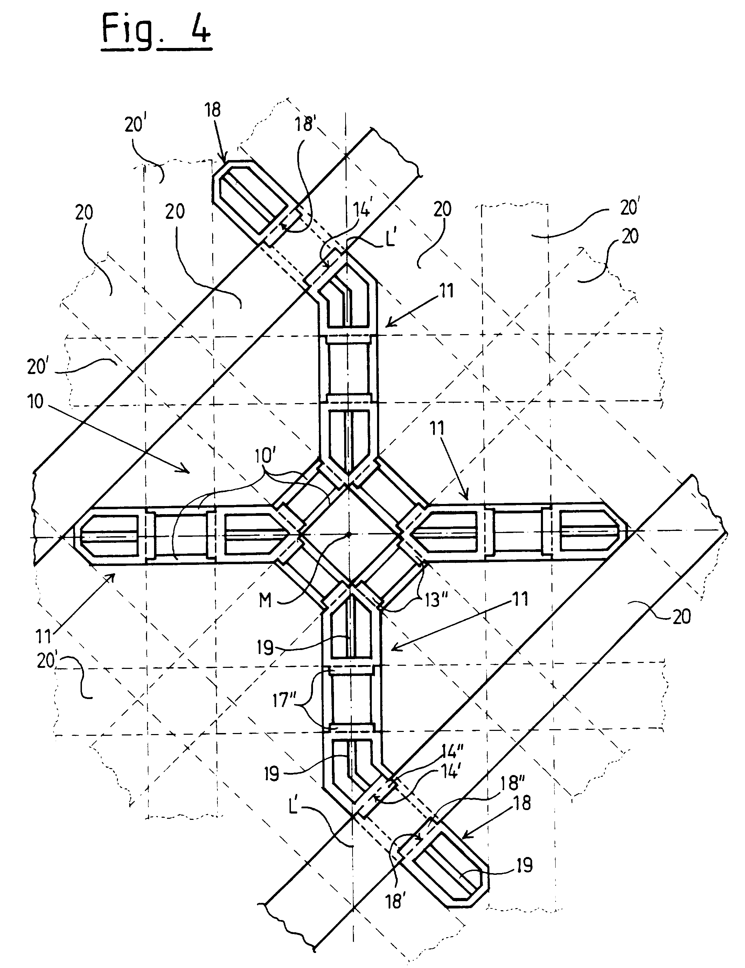

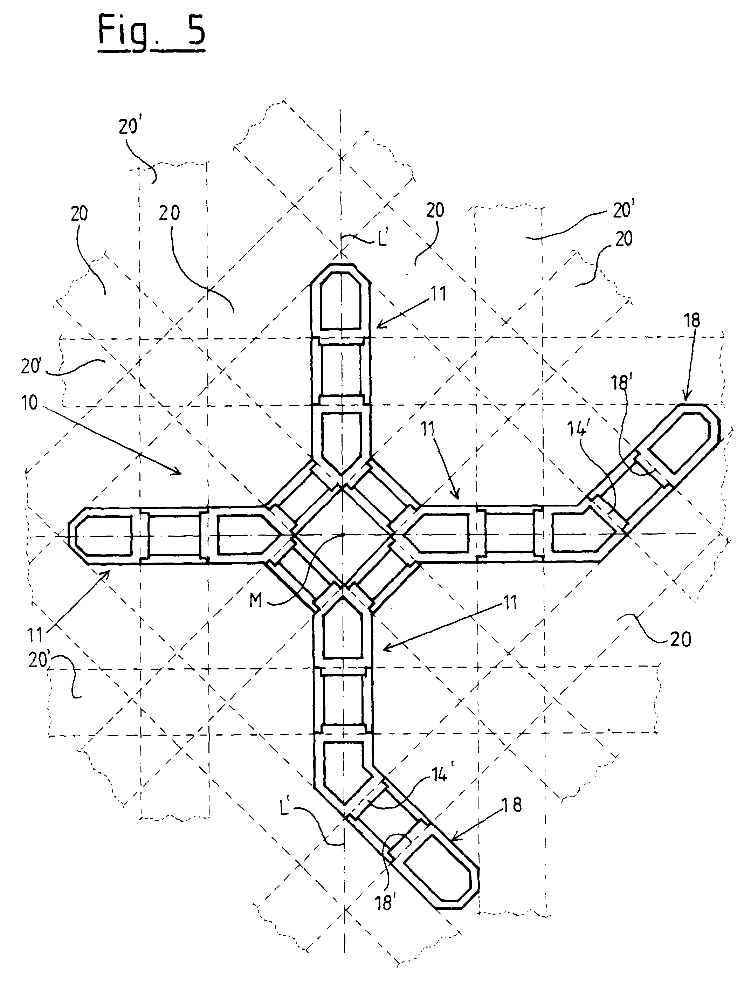

In den Figuren 4 und 5 sind zwei Ausführungen von Halteelementen 10 gezeigt, die der Ausführung gemäß Figur 2 ähneln, aber darüberhinaus jeweils noch zwei weitere Haltemöglichkeiten für die zu halternden strangförmigen Bauteile 20, 20' bieten. Das Halteelement 10 gemäß Figur 4 besitzt wieder zunächst vier längliche Bauteilhalter 11, die symmetrisch um den Mittelpunkt M herum angeordnet sind. In Nachbarschaft zu zwei von den vier Bauteilhaltern 11, hier zu dem oberen und unteren Bauteilhalter 11, ist je ein weiterer Bauteilhalter 18 angeordnet, wobei das dem zusätzlichen Bauteilhalter 18 zugewandte Ende des Bauteilhalters 11 mit einer Haltefläche 14' und der zusätzliche Bauteilhalter 18 mit einer der Haltefläche 14' gegenüberliegenden Haltefläche 18' ausgebildet ist. Weiterhin ist hier die Verbindungslinie zwischen den Halteflächen 14' und 18' jeweils um 45° gegenüber der Längsrichtung L' abgewinkelt, so daß die hier zusätzlich geschaffene Halterungsmöglichkeit eine Verlegerichtung in Richtung der Diagonalen auf zwei parallelen Wegen ergibt, wie dies durch die in durchgehenden Linien eingezeichneten Rohre 20 angedeutet ist. Zusätzliche Verlegewege, die bei dem hier gezeigten Halteelement 10 möglich sind, sind durch gestrichelt angedeutete Rohre 20 und 20' gezeigt.

Zur Sicherung der Rohre 20, 20' nach dem Einlegen in das Halteelement 10 sind hier am oberen Ende der jeweiligen Halteflächen 14' und 18' elastisch-flexibel aufweitbare Federelemente 14'', 18'' vorgesehen, die hier streifenförmig ausgebildet sind. Beim Eindrücken eines Rohres 20 weichen diese Federelemente 14'', 18'' aus und nehmen nach dem Vorbeigang des Rohres 20 wieder ihre ursprüngliche Stellung ein, in der sie teilweise über das Rohr 20 greifen und dieses so an einem ungewollten Lösen aus dem Halteelement 10 bzw. dessen Bauteilhaltern 11, 18 hindern. Derartige Federelemente können auch an den anderen Halteflächen der Bauteilhalter 11 vorgesehen sein, wie dies beispielsweise unter den Bezugsziffern 13'' und 17'' dargestellt ist.

Schließlich zeigt die Figur 4 noch innerhalb der einzelnen Bauteilhalter 11, 18 in Richtung der Längsache L, L' verlaufende Aussteifungsstege 19, die für eine höhere Stabilität des Halteelementes 10 sorgen.

Figur 5 der Zeichnung zeigt ein Ausführungsbeispiel eines Halteelementes 10, das im wesentlichen dem Halteelement gemäß Figur 4 entspricht, im Unterschied dazu aber zusätzliche Bauteilhalter 18 aufweist, die an zwei einander benachbarten Bauteilhaltern 11 angeordnet sind. Hierdurch werden zwischen den entsprechenden Halteflächen 14' und 18' zwei zusätzliche Verlegungsmöglichkeiten für Rohre 20 gebildet, die unter einen Winkel von 90° zueinander jeweils in Diagonalrichtung verlaufen.

Außer wie in Figur 4 und 5 gezeigt, können die Halteelemente 10 auch mit einem, drei oder vier zusätzlichen Bauteilhaltern 18 ausgebildet sein, falls hierfür ein Bedarf besteht, was vom jeweiligen Einsatzfall abhängt.

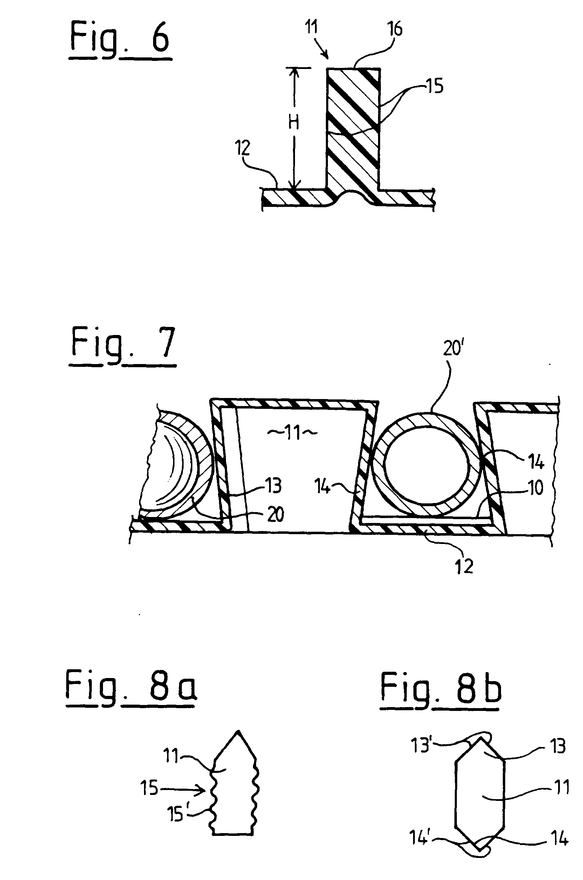

Figur 6 der Zeichnung zeigt einen Bauteilhalter 11 im Querschnitt gemäß der Schnittlinie VI-VI in Figur 1, wobei hier ersichtlich ist, daß der Bauteilhalter 11 ein massives, mit der Grundebene 12 einstückiges Kunststoffteil ist. Weiterhin ist ersichtlich, daß die Seitenflächen hier glattflächig ausgebildet sind und rechtwinklig von der Grundebene 12 aufragen. Die Oberseite 16 des Bauteilhalters 11 ist ebenfalls glattflächig und horizontal verlaufend ausgeführt. Der Bauteilhalter 11 besitzt von der Grundebene 12 an gemessen eine Höhe H, die vorzugsweise etwa dem Durchmesser eines zu halternden Rohres entspricht oder geringfügig größer ist als der Rohrdurchmesser.

Aus Figur 7 ist ersichtlich, daß die Halteflächen 13' und die Seite 14 zur Rückhaltung eines eingelegten Rohres 20' hinterschnitten sind. Da die Klemmung durch die elastische Verformung der Bauteilhalter 11, ggf. in Verbindung mit diese ausfüllenden Vorsprüngen eines Isolierelementes (nicht dargestellt), bewirkt wird, ist die Größe des Hinterschneidungswinkels nicht von entscheidender Bedeutung. Unter dem Rohr 20' ist eine Rippe 10' erkennbar, auf welcher das Rohr 20' aufliegt.

Die Wände der Bauteilhalter 11 sind hier in bekannter Weise durch einen Tiefziehvorgang einstückig aus einer die Grundebene 12 bildenden Folie als Ausstülpung ausgeformt. Die Foliendicke beträgt üblicherweise im nicht gezogenen Bereich zwischen etwa 0,2 und 0,7 mm. Das verwendete Material ist üblicherweise abriebfester, relativ zäher Kunststoff, z.B. PVC, PET, PP oder PE.

Während bei den anhand der Figuren 1 bis 7 beschriebenen Bauteilhaltern 11 die Wände jeweils glattflächig sind, ist in Figur 8a als weiteres Ausführungsbeispiel eines Bauteilhalters 11 eine Ausführung mit Seitenwänden 15 mit Wellen 15' gezeigt. Die Wellen 15' in den Seitenwänden 15 dienen zur Versteifung des Bauteilhalters 11, wodurch wahlweise dessen Stabilität bei vorgegebener Materialstärke vergrößert oder bei gleichbleibender Stabilität die Materialstärke vermindert werden kann. Anstelle der Wellen 15' können auch Sicken oder Rippen zur Versteifung vorgesehen werden.

Figur 8b zeigt einen weiteren Bauteilhalter 11, bei dem sowohl an der Seite 13 als auch spiegelsymmetrisch dazu an der Seite 14 jeweils zwei Klemmflächen 13' und 14' vorgesehen sind. Dabei bilden sowohl die Klemmflächen 13' als auch die Klemmflächen 14' einen Winkel von 45° zur Längsrichtung des Bauteilhalters 11.

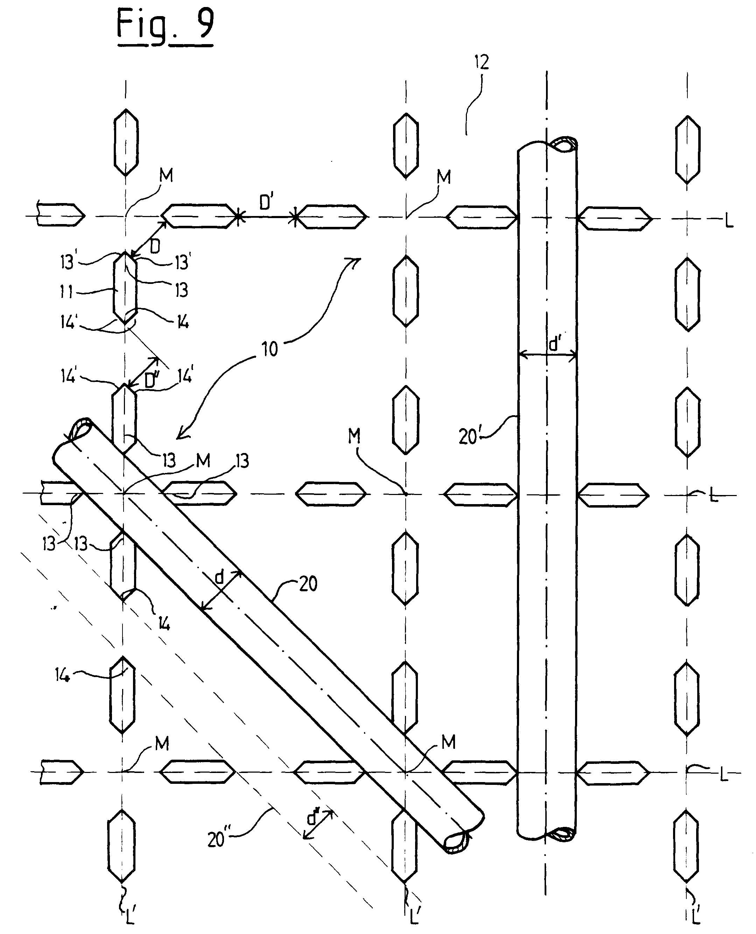

Mit Bezugnahme auf Figur 9 ist ein Halte- und Distanzierungssystem mit aus Bauteilhaltern 11 gemäß Figur 8b gebildeten Halteelementen 10 dargestellt. Es ist ersichtlich, daß die Längsachsen L, L' ein gleichmäßiges, quadratisches Raster auf der Grundebene 12 bilden, deren Umriß nicht dargestellt ist. Ein erstes Rohr 20 erstreckt sich diagonal zum Raster und wird von den dem Mittelpunkt M zugewandten Halteflächen 13' diagonal nebeneinanderliegender Halteelemente 10 gehaltert. Ein weiteres Rohr 20' erstreckt sich parallel zur Längsachse L' und wird von den Halteflächen 14' der vom Mittelpunkt M abgewandten Seiten 14 gebildeten Spitzen je eines Bauteilhalters 11 zweier benachbarter Halteelemente 10 gehaltert.

Ein weiteres, ebenfalls diagonal, parallel zum Rohr 20 verlaufendes Rohr 20'' ist in gestrichelten Linien angedeutet. Dieses dritte Rohr 20'' wird, wie das Rohr 20', jeweils zwischen den Seiten 14 zweier Bauteilhalter 11 zweier benachbarter Halteelemente 10 gehaltert. Je nach Abstand zwischen den einzelnen Halteelementen 10 kann der lichte Abstand D'' zwischen den einander gegenüberliegenden Seiten 14 bzw. Halteflächen 14' der Bauteilhalter 11 zweier benachbarter Halteelemente 10 so gewählt werden, daß sich in der Diagonalrichtung, d. h. in Laufrichtung des Rohres 20 und des Rohres 20'', eine Klemmmöglichkeit für einen dritten Rohrdurchmesser ergibt, wobei hier die Abstände der einzelnen Halteelemente 10 so gewählt sind, daß der Abstand D'' kleiner ist als die Abstände D und D', wodurch sich für das Rohr 20'' ein klemmbarer Durchmesser d'' ergibt, der entsprechend kleiner ist als die Rohrdurchmesser d und d' der Rohre 20 und 20'. Alternativ kann der Abstand D'' auch so gewählt werden, daß sich ein dem Abstand D entsprechendes Maß ergibt, wodurch sich die Zahl der möglichen Wege für ein zu klemmendes Rohr 20 mit dem Durchmesser d verdoppelt.

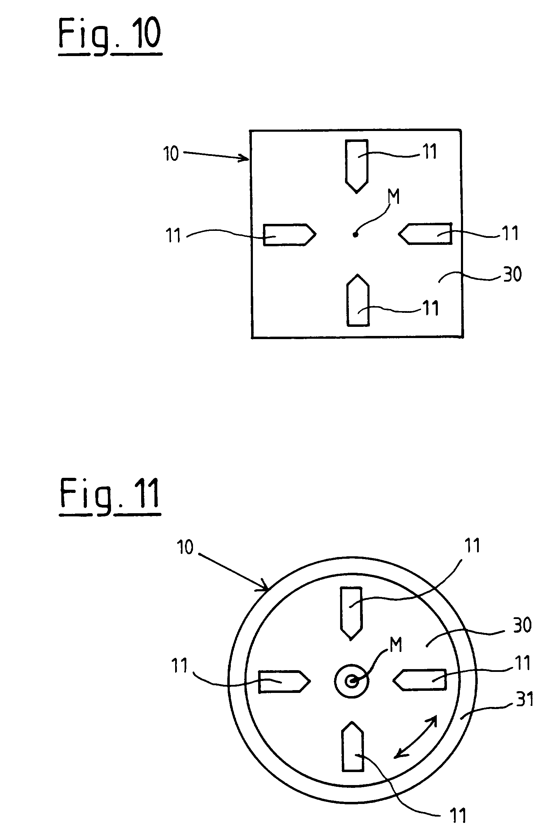

Figur 10 der Zeichnung zeigt ein Einzel-Halteelement 10, das aus einer plattenförmigen Grundstruktur 30 mit vier darauf angeordneten Bauteilhaltern 11 besteht, wobei letztere wie zuvor beschrieben symmetrisch um einen Mittelpunkt M herum angeordnet sind. In ihrer Form entsprechen die hier gezeigten Bauteilhalter 11 denjenigen aus Figur 1. Ein derart ausgebildetes Einzel-Halteelement 10 mit nur einer einzelnen Gruppe von vier Bauteilhaltern 11 kann vorteilhaft zur flexiblen und freizügigen Montage von strangförmigen Bauteilen an Montageflächen verwendet werden, insbesondere wenn eine geringe Bauteildichte vorliegt.

Figur 11 der Zeichnung schließlich zeigt ein weiteres Einzel-Halteelement 10, welches wie das Ausführungsbeispiel nach Figur 10 wieder eine Gruppe von vier Bauteilhaltern 11 aufweist, die um den Mittelpunkt M herum symmetrisch angeordnet sind. Auch hier sind die Bauteilhalter 11 auf einer plattförmigen Grundstruktur 30 angeordnet, wobei diese hier kreisrund ist, während sie bei dem Ausführungsbeispiel nach Figur 10 quadratisch ist. Unterhalb der Grundstruktur 30 ist eine weitere Platte 31, die als Montagehilfe dient, angeordnet. Wie durch den Bewegungspfeil auf der Grundstruktur 30 angedeutet ist, ist letztere zusammen mit den Bauteilhaltern 11 gegenüber der unterliegenden Montageplatte 31 in der Grundebene verdrehbar. Hierdurch wird auch nach Anbringung der Montageplatte 31 an einer Montagefläche eine Justierung des Halteelementes 10 durch Verdrehen der Grundstruktur 30 ermöglicht. Bei Bedarf kann auch eine Rastung oder Arretierung der Grundstruktur 30 gegenüber der Montageplatte 31 nach Einstellung einer gewünschten Ausrichtung vorgesehen sein.

## Patentansprüche

1. Halte- und Distanzierungssystem für strangförmige Bauteile, insbesondere Rohre oder Schläuche für die Durchleitung von Medien, zur Anordnung auf einer Montagefläche, wie Boden-, Wand-, Decken- oder Gehäusefläche, mit
modulartig zu verlegenden flächigen Halteelementen (10) mit in Gruppen angeordneten und von der Grundebene (12) des Halteelementes (10) aufragenden Bauteilhaltern (11), zwischen denen die strangförmigen Bauteile (20,20') festlegbar sind und zu benachbarten Bauteilen (20,20') distanzierbar sind, wobei
- die Bauteilhalter (11) jeweils eine längliche gestreckte Grundform aufweisen,
- jeweils vier Bauteilhalter (11) voneinander beabstandet rotationssymmetrisch um einen Mittelpunkt (M) als Haltergruppe angeordnet sind und sich ihre Längsachsen (L,L') dabei in dem Mittelpunkt (M) schneiden,
- die Bauteilhalter (11) an ihren dem Mittelpunkt (M) zugewandten Seiten (13) jeweils zwei von der Grundebene (12) des Halteelementes (10) aufragende und symmetrisch zu der zugehörigen Längsachse (L,L') angeordnete Halteflächen (13') aufweisen, die in einem Winkel von 30° bis 45° zur Längsachse (L,L') stehen und mit Rückhaltemitteln für ein eingelegtes strangförmiges Bauteil (20,20') ausgebildet oder versehen sind, und
- die Bauteilhalter (11) an ihren dem Mittelpunkt (M) abgewandten Seiten mit Rückhaltemitteln für ein strangförmiges Bauteil (20,20') versehen sind.

2. Halte- und Distanzierungssystem nach Anspruch 1, dadurch gekennzeichnet, daß jeweils die vom Mittelpunkt (M) abgewandte Seite (14) der Bauteilhalter (11) einer Haltergruppe eine Haltefläche (14') aufweist, die etwa senkrecht zur Längsachse (L, L') angeordnet und mit Rückhaltemitteln für ein eingelegtes strangförmiges Bauteil (20, 20') ausgebildet oder versehen ist.

3. Halte- und Distanzierungssystem nach Anspruch 1, dadurch gekennzeichnet, daß die vom Mittelpunkt (M) abgewandten Seiten (14) der Bauteilhalter (11) einer Haltergruppe jeweils zwei von der Grundebene (12) des Halteelementes (10) aufragende und symmetrisch zu der zugehörigen Längsachse (L, L') angeordnete Halteflächen (14') aufweisen, die in einem Winkel von 30° - 45° zur Längsachse (L, L') stehen und mit Rückhaltemitteln für ein eingelegtes strangförmiges Bauteil (20, 20') ausgebildet oder versehen sind.

4. Halte- und Distanzierungssystem nach einem der Ansprüche 1 bis 3, dadurch gekennzeichnet, daß die Rückhaltemittel durch elastisch-flexibel aufweitbare Hinterschneidungen gebildet sind.

5. Halte- und Distanzierungssystem nach einem der Ansprüche 1 bis 3, dadurch gekennzeichnet, daß die Rückhaltemittel durch elastisch-flexibel aufweitbare Federelemente (13'', 14'', 17'', 18''), wie Federstreifen, -zungen oder -nasen, gebildet sind.

6. Halte- und Distanzierungssystem nach einem der vorangegangenen Ansprüche, dadurch gekennzeichnet, daß die Längsseiten (15) der Bauteilhalter (11) jeweils parallel zur zugehörigen Längsachse (L, L') angeordnet sind.

7. Halte- und Distanzierungssystem nach einem der vorangegangenen Ansprüche, dadurch gekennzeichnet, daß die Bauteilhalter (11) in ihrem Mittelbereich jeweils eine Querausnehmung oder -durchbrechung (17) mit zwei einander gegenüberliegenden, aufeinander zu weisenden Halteflächen (17') aufweisen.

8. Halte- und Distanzierungssystem nach einem der vorangegangenen Ansprüche, dadurch gekennzeichnet, daß an der von dem Mittelpunkt (M) abgewandten Seite wenigstens eines Bauteilhalters (11) einer Haltergruppe ein zusätzlicher Bauteilhalter (18) vorgesehen ist, wobei diese beiden Bauteilhalter (11, 18) einander gegenüberliegende, aufeinander zu weisende, zusammenwirkende Halteflächen (14', 18') aufweisen.

9. Halte- und Distanzierungssystem nach Anspruch 8, dadurch gekennzeichnet, daß die Verbindungslinie zwischen den Halteflächen (14', 18') des Bauteilhalters (11) der Haltergruppe und des zusätzlichen Bauteilhalters (18) gegenüber der Längsachse (L, L') des Bauteilhalters (11) der Haltergruppe um 45° abgewinkelt ist.

10. Halte- und Distanzierungssystem nach einem der vorangegangenen Ansprüche, dadurch gekennzeichnet, daß die Längsseiten (15) der Bauteilhalter (11) glattflächig sind und etwa senkrecht auf der Grundebene (12) des Halteelementes (10) angeordnet sind.

11. Halte- und Distanzierungssystem nach einem der Ansprüche 1 bis 9, dadurch gekennzeichnet, daß zumindest die Längsseiten (15) der Bauteilhalter (11) mit aussteifenden Rippen und/oder Wellen und/oder Sicken (15') versehen sind.

12. Halte- und Distanzierungssystem nach einem der vorangegangenen Ansprüche, dadurch gekennzeichnet, daß die Grundebene (12) des Halteelementes (10) zwischen den Bauteilhaltern (11) glattflächig ist.

13. Halte- und Distanzierungssystem nach einem der Ansprüche 1 bis 11, dadurch gekennzeichnet, daß zwischen den Bauteilhaltern (11) verlaufende, von der Grundebene (12) des Halteelementes (10) aufragende oder absinkende Rippen (10') vorgesehen sind.

14. Halte- und Distanzierungssystem nach Anspruch 13, dadurch gekennzeichnet, daß die Rippen (10') zwischen den Halteflächen (13', 14', 18') benachbarter Bauteilhalter (11, 18) verlaufen.

15. Halte- und Distanzierungssystem nach einem der vorangegangenen Ansprüche, dadurch gekennzeichnet, daß eine Vielzahl von Halteelementen (10) dergestalt auf einer gemeinsamen Grundebene (12) angeordnet ist, daß die Längsachsen (L, L') der Bauteilhalter (11) ein gleichmäßiges quadratisches Raster bilden.

16. Halte- und Distanzierungssystem nach einem der vorangegangenen Ansprüche , dadurch gekennzeichnet, daß der Abstand (D) zwischen den Halteflächen (13') zweier benachbarter Bauteilhalter (11) eines Halteelementes (10) gleich dem Abstand (D') zwischen den einander zugewandten Seiten (14) der Bauteilhalter (11) zweier benachbarter Halteelemente (10) ist.

17. Halte- und Distanzierungssystem nach einem der Ansprüche 1 bis 15, dadurch gekennzeichnet, daß der Abstand (D) zwischen den Halteflächen (13') zweier benachbarter Bauteilhalter (11) eines Halteelementes (10) kleiner oder größer als der Abstand (D') zwischen den einander zugewandten Seiten (14) der Bauteilhalter (11) zweier benachbarter Halteelemente (10) ist.

18. Halte- und Distanzierungssystem nach einem der Ansprüche 16 oder 17, dadurch gekennzeichnet, daß die Höhe (H) der Bauteilhalter (11) im wesentlichen gleich oder größer den Abständen (D, D') bzw. dem größeren dieser Abstände (D, D') ist.

19. Halte- und Distanzierungssystem nach einem der Ansprüche 1 bis 14, dadurch gekennzeichnet, daß jedes Halteelement (10) eine einzelne Haltergruppe von vier Bauteilhaltern (11) umfaßt, welche auf einer unterliegenden, an der Montagefläche anbringbaren Grundstruktur (30) angeordnet sind.

20. Halte- und Distanzierungssystem nach Anspruch 19, dadurch gekennzeichnet, daß die Flächengröße der Grundstruktur (30) im wesentlichen der von dem Halteelement (10) belegten Fläche entspricht.

21. Halte- und Distanzierungssystem nach Anspruch 19 oder 20, dadurch gekennzeichnet, daß jedes Halteelement (10) neben der aus vier Bauteilhaltern (11) bestehenden Haltergruppe wenigstens einen und höchstens vier zusätzliche Bauteilhalter (18) umfaßt.

22. Halte- und Distanzierungssystem nach einem der Ansprüche 19 bis 21, dadurch gekennzeichnet, daß unter der Grundstruktur (30) eine zur Anbringung des Halteelementes (10) an der Montagefläche dienende Montagehilfe oder -einrichtung (31) angeordnet ist.

23. Halte- und Distanzierungssystem nach Anspruch 22, dadurch gekennzeichnet, daß an der Montagehilfe oder -einrichtung (31) die Grundstruktur (30) mit den vier die Haltergruppe bildenden Bauteilhaltern (11) um den zugehörigen Mittelpunkt (M) in der Grundebene drehbar gehalten ist.

24. Halte- und Distanzierungssystem nach Anspruch 23, dadurch gekennzeichnet, daß die drehbare Halterung mit mehreren Raststellen, welche mit bevorzugten Verdrehstellungen korrespondieren oder mit einer Arretierung ausgebildet ist.

25. Halte- und Distanzierungssystem nach einem der Ansprüche 1 bis 24, dadurch gekennzeichnet, daß das Halteelement (10) als massives Formteil ausgebildet ist.

26. Halte- und Distanzierungssystem nach einem der Ansprüche 1 bis 24, dadurch gekennzeichnet, daß das Halteelement (10) als Spritzteil ausgebildet ist.

27. Halte- und Distanzierungssystem nach einem der Ansprüche 1 bis 24, dadurch gekennzeichnet, daß das Halteelement (10) als verripptes Folienformteil ausgebildet ist.

28. Halte- und Distanzierungssystem nach einem der Ansprüche 1 bis 24, dadurch gekennzeichnet, daß das Halteelement (10) als Ausformung auf einer großen Folienfläche ausgebildet ist.

29. Halte- und Distanzierungssystem nach einem der Ansprüche 1 bis 28, dadurch gekennzeichnet, daß das Halteelement (10) als Abfallwertstoffteil ausgebildet ist.

30. Halte- und Distanzierungssystem nach einem der Ansprüche 1 bis 28, dadurch gekennzeichnet, daß das Halteelement (10) als auf der Grundebene (12) oder Grundstruktur (30) fixiertes Isolierschaumteil ausgebildet ist und daß die Grundebene (12) oder Grundstruktur (30) als Folie, Abfallwertstoffplatte oder Isolierstoffplatte ausgebildet ist.

31. Halte- und Distanzierungssystem nach Anspruch 30, dadurch gekennzeichnet, daß die Grundebene (12) oder Grundstruktur (30) mit einem Folienüberzug ausgebildet ist.

## Claims

1. A support and distance system for string-shaped components, in particular pipes or hoses for conveying media therethrough, the system being intended for disposal on a mounting surface such as a bottom surface, a wall surface, a ceiling surface or a housing surface, comprising
plane support elements (10) to be placed in the manner of modules, the support elements comprising component supports (11) arranged in groups and rising from the base plane (12) of said support element (10), said component supports being adapted to fix said string-shaped components (20, 20') between them and to space string-shaped components from adjacent string-shaped components (20, 20'), wherein
- said component supports (11) each have an elongate base shape,
- four spaced apart component supports (11), respectively, are arranged rotationally symmetrically as a group of supports about a center point (M), their longitudinal axes (L, L') intersecting in the center point (M),
- the component supports (11) each have their sides (13) facing towards said center point (M) provided with two support surfaces (13') rising from said base plane (12) of said support element (10) and being arranged symmetrically with respect to the associated longitudinal axis (L, L'), said support surfaces being disposed in an angle of 30° to 45° relative to said longitudinal axis (L. L') and being formed or provided with retaining means for a string-shaped component (20, 20') placed therein, and
- the sides of said component supports (11) facing away from said center point (M) are provided with retaining means for a string-shaped component (20, 20').

2. The support and distance system of claim 1, characterized in that said component supports (11) in a group of supports have their respective sides (14) facing away from said center point (M) formed with a support surface (14') that is arranged almost perpendicular to said longitudinal axis (L, L') and is formed or provided with retaining means for a string-shaped component (20, 20') placed therein.

3. The support and distance system of claim 1, characterized in that said component supports (11) in a group of supports have their respective sides (14) facing away from said center point (M) formed with two respective support surfaces (14') rising from said base plane (12) of said support element (10) and being arranged symmetrically with respect to the associated longitudinal axis (L, L'), said support surfaces (14') being disposed in an angle of 30° to 45° relative to said longitudinal axis (L. L') and being formed or provided with retaining means for a string-shaped component (20, 20') placed therein.

4. The support and distance system of one of claims 1 to 3, characterized in that said retaining means are resilient undercuts.

5. The support and distance system of one of claims 1 to 3, characterized in that said retaining means are resiliently expansible spring elements (13", 14", 17", 18") such as spring strips, spring tongues or spring noses.

6. The support and distance system of one of the preceding claims, characterized in that the longitudinal sides (15) of the component supports (11) are each arranged in parallel to the associated longitudinal axis (L, L').

7. The support and distance system of one of the preceding claims, characterized in that said component supports (11) each have their center portion provided with a transversely extending recess or aperture (17) having opposite support surfaces (17') facing towards each other.

8. The support and distance system of one of the preceding claims, characterized in that at least one component support (11) in a group of supports has its side facing away from said center point provided with an additional component support (18), said pair of component supports (11, 18) having opposite cooperating support surfaces (14', 18') facing towards each other.

9. The support and distance system of claim 8, characterized in that a connecting line between said support surfaces (14', 18') of said component support (11) of said group of supports and said additional component support (18) is offset by an angle of 45° from the longitudinal axis (L, L') of said component support (11) of said group of supports.

10. The support and distance system of one of the preceding claims, characterized in that the surfaces of the longitudinal sides (15) of said component supports (11) are plane and are arranged almost perpendicularly on said base plane (12) of said support element (10).

11. The support and distance system of one of claims 1 to 9, characterized in that at least the longitudinal sides (15) of said component supports (11) are provided with reinforcing ribs and/or corrugations and/or beads (15').

12. The support and distance system of one of the preceding claims, characterized in that said base plane (12) of said support element (10) is plane between said component supports (11).

13. The support and distance system of one of claims 1 to 11, characterized in that ribs (10') rising from or sunk into said base plane (12) of said support element (10) are provided extending between said component supports (11).

14. The support and distance system of claim 13, characterized in that said ribs (10') extend between said support surfaces (13', 14', 18') of adjacent component supports (11, 18).

15. The support and distance system of one of the preceding claims, characterized in that a plurality of support elements (10) is arranged on a common base plane (12) such that the longitudinal axes (L, L') of said component supports (11) form a regular square grid.

16. The support and distance system of one of the preceding claims, characterized in that the distance (D) between said support surfaces (13') of two adjacent component supports (11) of one support element (10) is equal to the distance (D') between the facing surfaces (14) of the component supports (11) of two adjacent support elements (10).

17. The support and distance system of one of claims 1 to 15, characterized in that the distance (D) between said support surfaces (13') of two adjacent component supports (11) of one support element (10) is greater or smaller than the distance (D') between the facing surfaces (14) of the component supports (11) of two adjacent support elements (10).

18. The support and distance system of one of claims 16 or 17, characterized in that the height (H) of the component supports (11) is substantially equal to or larger than the distances (D, D') or the larger one of these distances (D, D').

19. The support and distance system of one of claims 1 to 14, characterized in that each support element (10) comprises a single group of supports composed of four component supports (11) arranged on an underlying base structure (30) adapted to be fastened to a mounting surface.

20. The support and distance system of claim 19, characterized in that the surface area of said base structure (30) substantially corresponds to the surface occupied by said support element (10).

21. The support and distance system of claim 19 or 20, characterized in that each support element (10) comprises at least one and at most four additional component supports (18) besides said group of supports consisting of four component supports (11).

22. The support and distance system of one of claims 19 to 21, characterized in that a mounting aid or means (31) for mounting said support element (10) to the mounting surface is provided underneath said base structure (30).

23. The support and distance system of claim 22, characterized in that said base structure (30) with said four component supports (11) forming said group of supports is held on said mounting aid or means (31) so as to be rotatable around the associated center point (M) in said base plane.

24. The support and distance system of claim 23, characterized in that said rotatable holder device is formed with a plurality of indexing points corresponding to preferred rotational positions, or with a locking means.

25. The support and distance system of one of claims 1 to 24, characterized in that said support element (10) is a solid shaped piece.

26. The support and distance system of one of claims 1 to 24, characterized in that said support element (10) is an injection-molded piece.

27. The support and distance system of one of claims 1 to 24, characterized in that said support element (10) is a ribbed shaped foil piece.

28. The support and distance system of one of claims 1 to 24, characterized in that said support element (10) is formed on a large-surface foil.

29. The support and distance system of one of claims 1 to 28, characterized in that said support element (10) is formed of recycling material.

30. The support and distance system of one of claims 1 to 28, characterized in that said support element (10) is formed as a piece of insulating foam fixed on said base plane (12) or said base structure (30) and that said base plane (12) or said base structure (30) is a foil, a recycling material plate or an insulating material plate.

31. The support and distance system of claim 30, characterized in that said base plane (12) or said base structure (30) is formed with a cover of foil material.

## Revendications

1. Système de fixation et d'écartement pour éléments de construction en forme de boudin, en particulier de tuyaux ou flexibles pour le passage de fluides, destiné à être disposé sur une surface de montage, telle que surface de sol, de mur, de plafond ou de boîtier, avec des éléments de fixation plats (10) à poser de forme modulaire, avec des supports d'élément de construction (11) disposés en groupes et s'élevant depuis le plan de base (12) de l'élément de fixation (10), entre lesquels les éléments de construction en forme de boudin (20, 20') peuvent être fixés et écartés d'éléments de construction (20, 20') voisins, dans lequel
- les supports d'élément de construction (11) présentent, chacun, une forme de base étirée en longueur,
- chaque fois quatre supports d'élément de construction (11) sont disposés en groupe de supports distants l'un de l'autre, symétriques en rotation autour d'un point central (M), leurs axes longitudinaux (L, L') se coupant au point central (M),
- les supports d'élément de construction (11) présentent, chacun, sur leurs côtés (13) orientés vers le point central (M), deux faces de fixation (13'), s'élevant depuis le plan de base (12) de l'élément de fixation (10) et disposées symétriquement par rapport à l'axe longitudinal (L, L') correspondant, qui forment un angle de 30° à 45° avec l'axe longitudinal (L, L') et sont réalisées avec des, ou pourvues de, moyens de retenue d'un élément de construction en forme de boudin (20, 20') inséré, et
- les supports d'élément de construction (11) sont pourvus, sur leurs côtés opposés au point central (M), de moyens de retenue pour un élément de construction en forme de boudin (20, 20').

2. Système de fixation et d'écartement selon la revendication 1, caractérisé par le fait que le côté (14), opposé au point central (M), de chacun des supports d'élément de construction (11) d'un groupe de supports présente une face de fixation (14') qui est disposée environ perpendiculairement à l'axe longitudinal (L, L') et est réalisée avec des, ou pourvue de, moyens de retenue pour un élément de construction en forme de boudin (20, 20') inséré.

3. Système de fixation et d'écartement selon la revendication 1, caractérisé par le fait que les côtés (14), opposés au point central (M), des supports d'élément de construction (11) d'un groupe de supports présentent, chacun, deux faces de fixation (14'), s'élevant depuis le plan de base (12) de l'élément de fixation (10) et disposées symétriquement par rapport à l'axe longitudinal (L, L') correspondant, qui forment un angle de 30° à 45° avec l'axe longitudinal (L, L') et sont réalisées avec des, ou pourvues de, moyens de retenue pour un élément de construction en forme de boudin (20, 20') inséré.

4. Système de fixation et d'écartement selon l'une des revendications 1 à 3, caractérisé par le fait que les moyens de retenue sont constitués par des contre-dépouilles pouvant être élargies de manière élastiquement flexible.

5. Système de fixation et d'écartement selon l'une des revendications 1 à 3, caractérisé par le fait que les moyens de retenue sont constitués par des éléments de ressort (13", 14", 17", 18") pouvant être élargis de manière élastiquement flexible, tels que des bandes, languettes ou nez-ressorts.

6. Système de fixation et d'écartement selon l'une des revendications précédentes, caractérisé par le fait que les côtés longitudinaux (15) des supports d'élément de construction (11) sont disposés, chacun, parallèlement à l'axe longitudinal (L, L') correspondant.

7. Système de fixation et d'écartement selon l'une des revendications précédentes, caractérisé par le fait que les supports d'élément de construction (11) présentent, chacun, dans leur partie centrale, un évidement ou perçée transversal (17) avec deux faces de fixation (17') opposées l'une à l'autre et orientées l'une vers l'autre.

8. Système de fixation et d'écartement selon l'une des revendications précédentes, caractérisé par le fait qu'il est prévu, sur le côté opposé au point central (M) d'au moins l'un des supports d'élément de construction (11) d'un groupe de supports, un support d'élément de construction supplémentaire (18), ces deux supports d'élément de construction (11, 18) présentant des faces de fixation (14', 18') opposées l'une à l'autre, orientées l'une vers l'autre et coopérant l'une avec l'autre.

9. Système de fixation et d'écartement selon la revendication 8, caractérisé par le fait que la ligne de liaison entre les faces de fixation (14', 18') du support d'élément de construction (11) du groupe de supports et du support d'élément de construction supplémentaire (18) forme un angle de 45° par rapport à l'axe longitudinal (L, L') du support d'élément de construction (11) du groupe de supports.

10. Système de fixation et d'écartement selon l'une des revendications précédentes, caractérisé par le fait que les côtés longitudinaux (15) des supports d'élément de construction (11) sont à face lisse et sont disposés environ perpendiculairement au plan de base (12) de l'élément de fixation (10).

11. Système de fixation et d'écartement selon l'une des revendications 1 à 9, caractérisé par le fait qu'au moins les côtés longitudinaux (15) des supports d'élément de construction (11) sont pourvus de nervures et/ou d'ondulations et/ou de moulures de raidissement (15').

12. Système de fixation et d'écartement selon l'une des revendications précédentes, caractérisé par le fait que le plan de base (12) de l'élément de fixation (10) est à face lisse entre les supports d'élément de construction (11).

13. Système de fixation et d'écartement selon l'une des revendications 1 à 11, caractérisé par le fait qu'il est prévu des nervures (10') s'étendant entre les supports d'élément de construction (11), s'élevant ou descendant depuis le plan de base (12) de l'élément de fixation (10).

14. Système de fixation et d'écartement selon la revendication 13, caractérisé par le fait que les nervures (10') s'étendent entre les faces de fixation (13', 14', 18') de supports d'élément de construction (11, 18) adjacents.

15. Système de fixation et d'écartement selon l'une des revendications précédentes, caractérisé par le fait qu'une pluralité d'éléments de fixation (10) sont disposés sur un plan de base (12) commun, de telle façon que les axes longitudinaux (L, L') des supports d'élément de construction (11) forment une trame carrée régulière.

16. Système de fixation et d'écartement selon l'une des revendications précédentes, caractérisé par le fait que la distance (D) entre les faces de fixation (13') de deux supports d'élément de construction (11) adjacents d'un élément de fixation (10) est égale à la distance (D') entre les côtés (14) orientés l'un vers l'autre des supports d'élément de construction (11) de deux éléments de fixation (10) adjacents.

17. Système de fixation et d'écartement selon l'une des revendications 1 à 15, caractérisé par le fait que la distance (D) entre les faces de fixation (13') de deux supports d'élément de construction (11) adjacents d'un élément de fixation (10) est inférieure ou supérieure à la distance (D') entre les côtés (14) orientés l'un vers l'autre des supports d'élément de construction (11) de deux éléments de fixation (10) adjacents.

18. Système de fixation et d'écartement selon l'une des revendications 16 ou 17, caractérisé par le fait que la hauteur (H) des supports d'élément de construction (11) est sensiblement égale ou supérieure aux distances (D, D'), respectivement à la plus grande de ces distances (D, D').

19. Système de fixation et d'écartement selon l'une des revendications 1 à 14, caractérisé par le fait que chaque élément de fixation (10) comporte un seul groupe de supports de quatre supports d'élément de construction (11), qui sont disposés sur une structure de base (30) située au-dessous et pouvant être posée sur la face de montage.

20. Système de fixation et d'écartement selon la revendication 19, caractérisé par le fait que la grandeur de surface de la structure de base (30) correspond sensiblement à la surface occupée par l'élément de fixation (10).

21. Système de fixation et d'écartement selon la revendication 19 ou 20, caractérisé par le fait que chaque élément de fixation (10) comporte, outre le groupe de supports composé de quatre supports d'élément de construction (11), au moins un et au plus quatre supports d'élément de construction (18) supplémentaires.

22. Système de fixation et d'écartement selon l'une des revendications 19 à 21, caractérisé par le fait que sous la structure de base (30) est disposé un accessoire ou dispositif de montage (31) servant à la pose de l'élément de fixation (10) sur la surface de montage.

23. Système de fixation et d'écartement selon la revendication 22, caractérisé par le fait que sur l'accessoire ou dispositif de montage (31) est fixée, de manière rotative autour du point central (M) correspondant dans le plan de base, la structure de base (30) avec les quatre supports d'élément de construction (11) formant le groupe de supports.

24. Système de fixation et d'écartement selon la revendication 23, caractérisé par le fait que le support rotatif est réalisé avec plusieurs crans d'arrêt, correspondant à des endroits de déplacement préférés, ou avec une butée d'arrêt.

25. Système de fixation et d'écartement selon l'une des revendications 1 à 24, caractérisé par le fait que l'élément de fixation (10) se présente sous forme de pièce moulée massive.

26. Système de fixation et d'écartement selon l'une des revendications 1 à 24, caractérisé par le fait que l'élément de fixation (10) se présente sous forme de pièce moulée par injection.

27. Système de fixation et d'écartement selon l'une des revendications 1 à 24, caractérisé par le fait que l'élément de fixation (10) se présente sous forme de pièce moulée en film à nervures.

28. Système de fixation et d'écartement selon l'une des revendications 1 à 24, caractérisé par le fait que l'élément de fixation (10) se présente sous forme de pièce surmoulée sur une grande surface de film.

29. Système de fixation et d'écartement selon l'une des revendications 1 à 28, caractérisé par le fait que l'élément de fixation (10) se présente sous forme de pièce en matériau recyclé.

30. Système de fixation et d'écartement selon l'une des revendications 1 à 28, caractérisé par le fait que l'élément de fixation (10) se présente sous forme de pièce en mousse isolante fixée sur le plan de base (12) ou sur la structure de base (30) et que le plan de base (12) ou la structure de base (30) se présente sous forme de film, de plaque de matériau recyclé ou de plaque de matériau isolant.

31. Système de fixation et d'écartement selon la revendication 30, caractérisé par le fait que le plan de base (12) ou la structure de base (30) se présente avec un revêtement de film.
